# EUROPEAN PATENT SPECIFICATION

(11) **EP 0 335 606 B1**
(45) Date of publication and mention of the grant of the patent: **12.10.1994**
(21) Application number: 89302930.6
(22) Date of filing: 23.03.1989
(51) Int. Cl.: H01J 29/07

(54) **Color picture tube having improved shadow mask-frame assembly**
Farbbildröhre mit verbesserter Lochmasken-Rahmenstruktur
Tube image couleur à structure cadre-masque d'ombre améliorée

(30) Priority: 30.03.1988 US 175895
(43) Date of publication of application: 04.10.1989
(73) Proprietor: RCA Thomson Licensing Corporation, Princeton, NJ 08540 (US)
(72) Inventor: Ragland, Frank Rowland, Jr., Lancaster Pennsylvania 17601 (US)
(74) Representative: Pratt, Richard Wilson

(56) References cited:
- US-A- 2 905 846
- US-A- 2 922 063
- US-A- 4 056 755
- US-A- 4 599 533
- US-A- 4 670 687

## Description

This invention relates to color picture tubes of the type having a shadow mask attached to a peripheral frame which is suspended in relation to a cathodoluminescent screen, and, particularly, to a novel mask-frame assembly for such tubes.

In color picture tubes, the accuracy with which the electron beams, emitted from an electron gun, strike individual elemental cathodoluminescent screen areas depends to a great degree upon the accuracy with which the shadow mask apertures are aligned with the elemental screen areas during operation of the tube. During initial tube operation, the shadow mask is heated, by the impingement of the electron beams thereon, at a much faster rate than is the heavier peripheral frame. Because of the lack of heat input to the mask periphery, the apertured portion of the shadow mask expands at a greater rate than does its periphery. The mask periphery acts as a cold band around the apertured portion and causes the apertured portion to dome. Such doming causes the electron beams, passing through the mask, to misregister with their associated elemental screen areas, thereby producing an undesirable shift in color on the screen.

In most current color picture tube types, the peripheral frame is suspended in a faceplate panel by means of springs that either are directly welded to the frame or are welded to plates which in turn are welded to the frame. In the directly welded version, the springs are made of bimetallic metals, and in the plate version, the plates are of bimetallic material. As the springs or plates become heated by transfer of heat from the mask through the frame, the bimetallic materials expand differently, thereby bending the springs or plates to cause movement of the mask-frame assembly toward the tube screen.

It is common to use either three or four springs to support a mask-frame assembly within a rectangular faceplate panel of a tube. In a three spring support system, one spring is usually located at the upper center of the mask, and the other two springs are located along the sides of the tube between the centers of the sides of the mask and the lower two corners of the mask. In a four-spring support system, springs are usually located at the top and bottom centers of the mask and at the left and right centers of the mask. In both the three- and four-spring support systems, as described above, it is possible for the mask-frame assembly to slightly twist and shift relative to the faceplate during tube operation.

There is a need to develop a tube with a mask-frame assembly and support system that will minimize the mask doming, mask twisting and shifting problems, and that also will be economical to construct. The present invention fulfills such a need.

In accordance with the present invention, a color picture tube of the shadow mask type includes an improved mask-frame assembly. The frame has two substantially perpendicular flanges, a first flange and a second flange. The first flange extends from the second flange away from the screen of the tube. The second flange extends from the first flange toward the shadow mask. The second flange includes peripherally spaced tabs extending therefrom. The shadow mask is attached to the tabs. In a preferred embodiment, the corners of the frame are truncated.
Springs are interconnected to each truncated corner of the frame to support the mask-frame assembly within the tube.

In the drawings:

FIGURE 1 (Sheet 1) is an axially sectioned side view of a color picture tube embodying the present invention.

FIGURE 2 (Sheet 2) is a partial axially sectioned top view of the faceplate panel and mask-frame assembly of the tube of FIGURE 1.

FIGURE 3 (Sheet 3) is a partial bottom view of the faceplate panel and mask-frame assembly taken at line 3-3 of FIGURE 2.

FIGURE 4 (Sheet 2) is a sectional view of a corner of the faceplate panel and frame of the tube of FIGURE 1, also showing a support assembly.

FIGURE 5 (Sheet 2) is a front view of the support assembly of FIGURE 4.

FIGURE 6 (Sheet 4) is a front view of the frame of the tube of FIGURE 1.

FIGURE 7 (Sheet 4) is a sectional view of the frame taken at line 7-7 of FIGURE 6.

FIGURE 8 (Sheet 4) is a sectional view of the frame taken at line 8-8 of FIGURE 6.

FIGURE 9 (Sheet 3) is a cross-sectional view of the frame taken at line 9-9 of FIGURE 6.

FIGURE 10 (Sheet 3) is a cross-sectional view of the frame taken at line 10-10 of FIGURE 6.

FIGURE 11 (Sheet 3) is a cross-sectional view of an alternative frame corresponding to the view of FIGURE 9.

FIGURE 12 (Sheet 3) is a cross-sectional view of the alternative frame corresponding to the view of FIGURE 10.

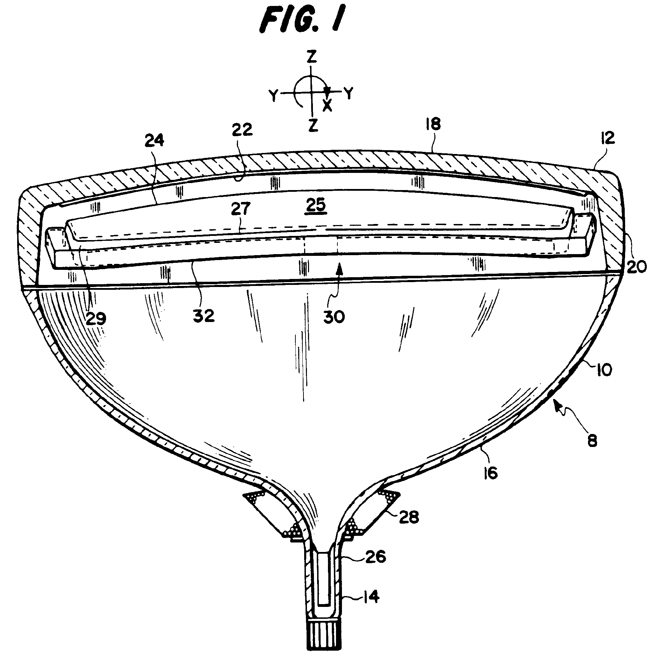

FIGURE 1 shows a rectangular color picture tube 8 having a glass envelope 10, comprising a rectangular faceplate panel 12 and a tubular neck 14 connected by a rectangular funnel 16. The panel 12 comprises a viewing faceplate 18 and peripheral flange or sidewall 20 which is sealed to the funnel 16. The faceplate panel 12 includes two orthogonal axes: a major axis X-X, parallel to its wider dimension (usually horizontal), and a minor axis Y-Y, parallel to its narrower dimension (usually vertical). The major and minor axes are perpendicular to the central longitudinal axis Z-Z of the tube which passes through the center of the neck 14 and the center of the panel 12. A mosaic three-color phosphor screen 22 is carried by the inner surface of the faceplate 18. The screen preferably is a line screen with the phosphor lines extending substantially parallel to the minor axis Y-Y. Alternatively, the screen may be a dot screen. A multiapertured color selection electrode or shadow mask 24 is removably mounted, by novel means, in predetermined spaced relation to the screen 22. An electron gun 26 is centrally mounted within the neck 14, to generate and direct three electron beams along convergent paths through the mask 24 to the screen 22.

The tube of FIGURE 1 is designed to be used with an external magnetic deflection yoke, such as the yoke 28 in the neighborhood of the funnel-to-neck junction. When activated, the yoke 28 subjects the three beams to magnetic fields which cause the beams to scan horizontally and vertically in a rectangular raster over the screen 22.

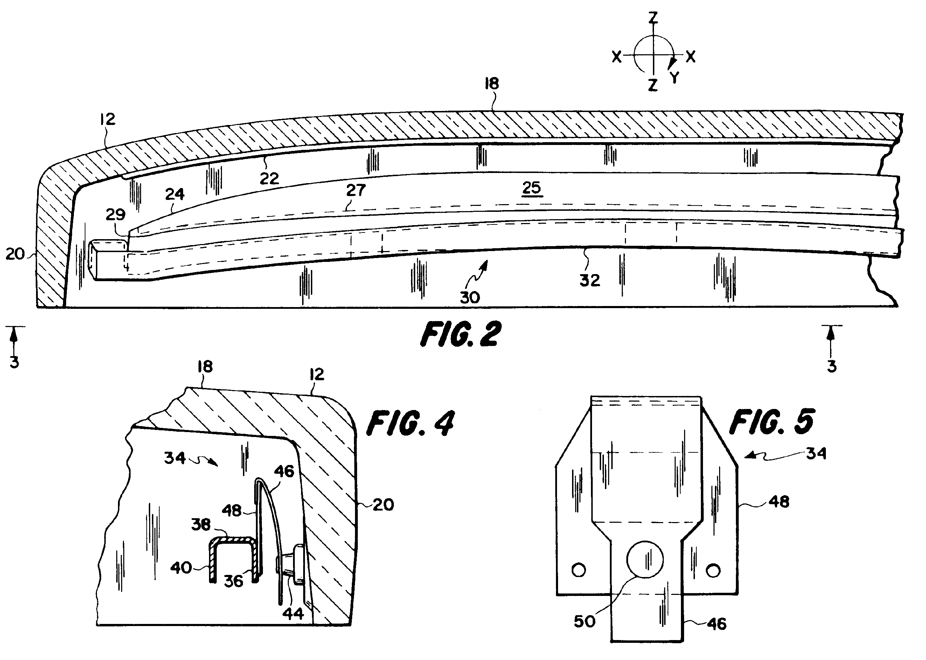

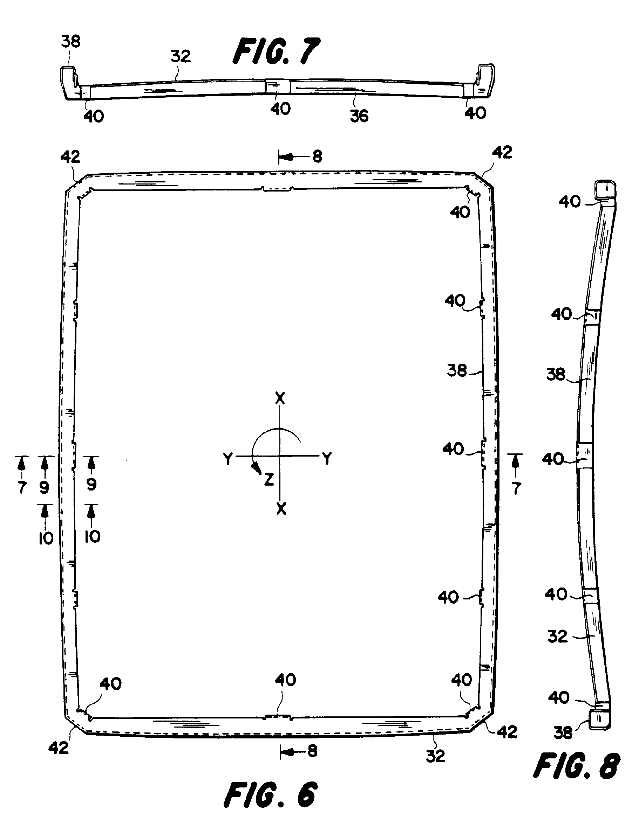

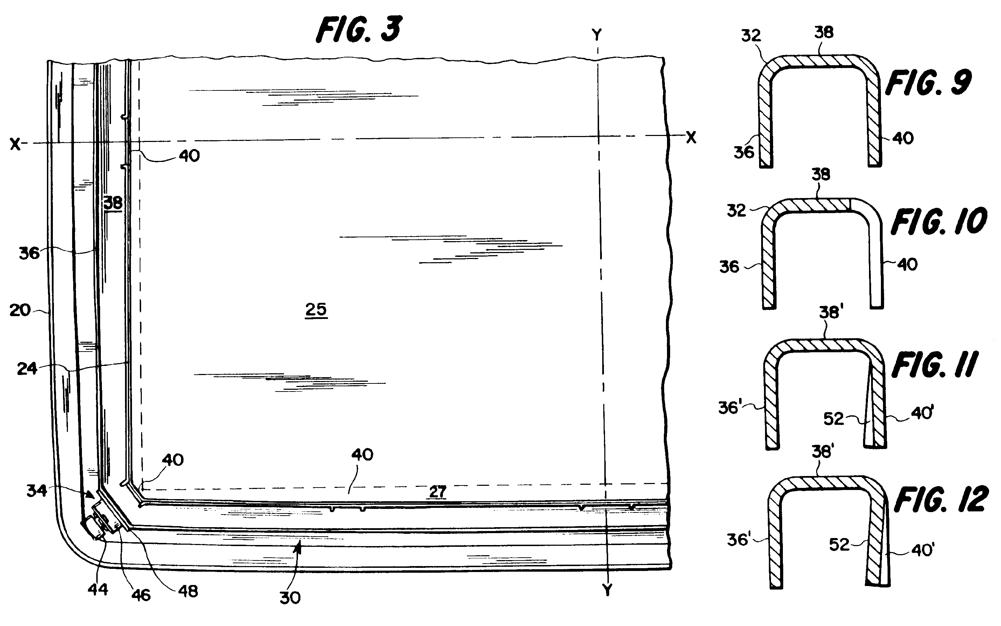

The shadow mask 24 is part of a novel mask-frame assembly 30 that also includes a peripheral frame 32. The mask-frame assembly 30 is shown positioned within the faceplate panel 12 in FIGURES 1, 2 and 3. The mask-frame assembly 30 is mounted to the panel 12 by support means 34 shown in FIGURES 3, 4 and 5. The frame 32 is shown, by itself, in three different views in FIGURES 6, 7 and 8, and in cross-sections in FIGURES 9 and 10.

The frame 32 includes two substantially perpendicular flanges, a first flange 36 and a second flange 38, in an L-shaped cross-sectional configuration. The first flange 36 extends from the second flange 38 in a direction away from the screen 22. The second flange 38 extends from the first flange 36 in a direction toward the mask 24 and central longitudinal axis Z-Z of the tube 8. The distal edge of the second flange 38 includes a plurality of tabs 40 that are peripherally spaced from each other and extend away from the screen 22. The four corners 42 of the frame 32 are truncated, being angled approximately perpendicular to the diagonal directions of the frame.

The mask-frame assembly support means 34 includes a support assembly in each of the four corners of the frame and panel. Each support assembly includes a stud 44, a spring 46 and a bimetallic plate 48. Each stud 44 is a hollow conical-shaped metal member that is imbedded in the sidewall 20. Each bimetallic plate 48 is welded to the flange 36 at a truncated corner 42 of the frame 32 so that it extends toward the faceplate 18 with its lower expansion side facing a stud. Each spring 46 is bent back to about 22° at one end, after it is welded to the bimetallic plate 48. An aperture 50, near the free end of each spring 46, engages the conical tip of a stud 44.

The shadow mask 24, as shown in FIGURES 1, 2 and 3, includes a curved apertured portion 25; an imperforate border portion 27, surrounding the apertured portion 25; and a skirt portion 29, bent back from the border portion 27 and extending away from the screen 22. The mask 24 is telescoped within or set inside the frame 32 and contacts the frame 32 only at the tabs 40. The skirt portion 29 of the mask is welded directly to eight of the twelve tabs 40. These eight tabs are located at the four corners and at the major and minor axes. The other four tabs serve as vibration suppressors. The number of tabs used for support and vibration suppression may vary in other embodiments.

Although the frame 32 has been shown with separated tabs 40 extending from the distal edge of the second flange 38, integral tabs 40′ also may be part of a third flange 52 that extends from the distal edge of a second flange 38′, as shown in FIGURES 11 and 12. In this alternative embodiment, a frame 32′ has a U-shaped cross-section around its periphery. FIGURE 11 represents a cross-section of the frame 32′ corresponding to the same location as the cross-section of FIGURE 9. FIGURE 12 represents a cross-section of the frame 32′ corresponding to the same location as the cross-section of FIGURE 10. The frame 32′ includes a first flange 36′ connected to the second flange 38′ in the same manner as the first flange 36 is connected to the second flange 38 in the frame 32. The third flange 52 extends from the second flange 38′ at an angle less than 90°, except for the portions of the flange 38′ that form the tabs 40′. The tabs 40′ are formed by embossments in the third flange 52, so that they can extend perpendicularly from the second flange 38′.

Unlike most prior masks, the mask 24 has a very narrow border portion 27. As little as about 3% electron beam overscan provides sufficient electron beam energy to heat the portion 27. The combination of reduced border size and limited contact with the frame 32 provides a reduction in the cold band around the apertured portion 25 of the mask 24, thereby reducing mask doming. Also, the limited contact of the skirt portion 29 with the tabs 40 permits some flexing of the skirt portion 29 during mask warmup, thereby further reducing mask doming.
Additionally, the support assemblies at the four corners of the frame and panel prevent twisting and shifting of the mask-frame assembly during tube operation. Furthermore, the mask-frame assembly 30, wherein the mask 24 is telescoped within or set inside the frame 32 or 32′, permits faster and more accurate fabrication of the assembly, thereby providing greater economy of construction. For example, because the tabs parallel the longitudinal axis Z-Z of the tube, the mask may be inserted into the frame from either side of the frame. This permits the possibility of first mounting the frame within the faceplate panel and then inserting or telescoping the mask into the frame from its back side. When properly positioned, the mask can be welded to the tabs which are easily accessible.

## Claims

1. A colour picture tube comprising an envelope including a rectangular faceplate panel and a neck interconnected therewith, said tube also comprising a rectangular shadow mask attached to a peripheral frame mounted by support means within said panel, a cathodoluminescent screen located on an interior surface of the faceplate of said panel, and an electron gun positioned within said neck for forming a plurality of electron beams and directing said beams through said shadow mask to said screen; characterized by said frame (32,32′) having an L-shaped cross-sectional configuration comprising first and second substantially perpendicular flanges (36,38,36′,38′), the first (36,36′) of said flanges extending from the second flange (38,38′) in a direction away from the faceplate panel and screen, and the second (38,38′) of said flanges extending from the first flange towards the central longitudinal axis of the picture tube, the second of said flanges including spaced tab means (40′) extending therefrom and said shadow mask being attached to said tab means.

2. The color picture tube as defined in Claim 1, characterized in that said support means (34) comprises assemblies at the four corners of said faceplate panel (12).

3. The color picture tube as defined in Claim 1, characterized in that the four corners of said frame (32,32′) are truncated.

4. The color picture tube as defined in Claim 3, characterized in that said support means (34) comprises assemblies attached to each of the four truncated corners of said frame (32,32′).

5. The color picture tube as defined in Claim 1, characterized in that said tab means (40′) are integral with a third flange (52) extending from said second flange (38′).

## Patentansprüche

1. Farbbildröhre, mit einem Röhrenkolben, der eine rechteckige Schirmträgerplatte und einen damit verbundenen Hals enthält, wobei die Röhre auch eine rechteckige Lochmaske enthält, die an einem Umfangsrahmen befestigt ist, der mit Stützmittel im Schirmträger montiert ist, sowie einen Kathodenstrahlleuchtschirm, der an einer Innenfläche des Schirmträgers angeordnet ist, und eine Elektronenkanone, die innerhalb des Halses zur Bildung einer Mehrzahl von Elektronenstrahlen und Ausrichtung der Strahlen durch die Lochmaske auf den Schirm angeordnet ist; **dadurch** **gekennzeichnet**, daß der Rahmen (32, 32′) eine L-förmige Querschnittskonstruktion aufweist, die erste und zweite, im wesentlichen senkrechte Flansche (36, 38, 36′, 38′) umfaßt, wobei sich der erste (36, 36′) der Flansche von dem zweiten Flansch (38, 38′) in eine von der Schirmträgerplatte und dem Schirm abweisende Richtung erstreckt, und der zweite (38, 38′) der Flansche sich von dem ersten Flansch zu der mittleren Längsachse der Bildröhre erstreckt, wobei der zweite der Flansche beabstandete Streifenmittel (40′) enthält, die von ihm abstehen, und die Lochmaske an den Streifenmitteln befestigt ist.

2. Farbbildröhre nach Anspruch 1, **dadurch** **gekennzeichnet**, daß das Stützmittel (34) an den vier Ecken der Schirmträgerplatte (12) Anordnungen einschließt.

3. Farbbildröhre nach Anspruch 1, **dadurch** **gekennzeichnet**, daß die vier Ecken des Rahmens (32, 32′) abgestumpft sind.

4. Farbbildröhre nach Anspruch 3, **dadurch** **gekennzeichnet**, daß jedes der Stützmittel (34) Anordnungen umfaßt, die an jeder der vier abgestumpften Ecken des Rahmens (32, 32′) anliegend sind.

5. Farbbildröhre nach Anspruch 1, **dadurch** **gekennzeichnet**, daß die Streifenmittel (40′) einstückig mit einem dritten Flansch (52) ausgebildet sind, der sich von dem zweiten Flansch (38′) erstreckt.

## Revendications

1. Tube image couleur comprenant une enveloppe comportant un panneau de plaque frontale rectangulaire et un col qui lui est relié, ledit tube comprenant également un masque perforé rectangulaire fixé à un cadre périphérique monté par un moyen de support à l'intérieur dudit panneau, un écran cathodoluminescent situé sur une surface intérieure de la plaque frontale dudit panneau et un canon à électrons situé dans ledit col pour former une pluralité de faisceaux d'électrons et orienter lesdits faisceaux à travers ledit masque perforé vers ledit écran ; caractérisé par ledit cadre (32, 32′) ayant une configuration de section transversale en forme de L , comprenant des première et seconde bordures sensiblement perpendiculaires (36, 38, 36′, 38′), la première (36, 36′) desdites bordures s'étendant à partir de la seconde bordure (38, 38′) dans une direction s'éloignant du panneau de plaque frontale et de l'écran , la seconde (38, 38′) desdites bordures s'étendant à partir de la première bordure vers l'axe longitudinal central du tube image, la seconde desdites bordures incluant des moyens de pattes espacées (40′) s'étendant à partir de la seconde bordure et ledit masque perforé étant fixé audit moyen de pattes.

2. Tube image couleur selon la revendication 1, caractérisé en ce que ledit moyen de support (34) comprend des assemblages au niveau des quatre coins dudit panneau de plaque frontale (12).

3. Tube image couleur selon la revendication 1, caractérisé en ce que les quatre coins dudit cadre (32, 32′) sont tronqués.

4. Tube image couleur selon la revendication 3, caractérisé en ce que ledit moyen de support (34) comprend les assemblages fixés à chacun des quatre coins tronqués dudit cadre (32, 32′).

5. Tube image couleur selon la revendication 1, caractérisé en ce que lesdits moyens de pattes (40′) sont solidaires d'une troisième bordure (52) s'étendant à partir de ladite seconde bordure (38′).
